# EUROPÄISCHE PATENTSCHRIFT

(11) **EP 2 540 004 B1**
(45) Veröffentlichungstag und Bekanntmachung des Hinweises auf die Patenterteilung: **25.07.2018**
(21) Anmeldenummer: 11704922.1
(22) Anmeldetag: 28.01.2011
(51) Int. Cl.: H04B 5/00, H04B 5/02, H02J 50/12

(54) **ANORDNUNG ZUR BERÜHRUNGSLOSEN ENERGIEÜBERTRAGUNG**
ARRANGEMENT FOR TRANSMITTING ENERGY WITHOUT CONTACT
DISPOSITIF DE TRANSFERT D'ÉNERGIE SANS CONTACT

(30) Priorität: 23.02.2010 DE 102010009073
(43) Veröffentlichungstag der Anmeldung: 02.01.2013
(73) Patentinhaber: Sew-Eurodrive GmbH & Co. KG, 76646 Bruchsal (DE)
(72) Erfinder: HUA, Zhidong, 76131 Karlsruhe (DE)
(86) Internationale Anmeldenummer: PCT/EP2011/000381
(87) Internationale Veröffentlichungsnummer: WO 2011/103954

(56) Entgegenhaltungen:
- WO-A1-99/50806
- DE-A1-102004 031 580
- DE-B3-102007 059 046

## Beschreibung

Die Erfindung betrifft eine Anordnung zur berührungslosen Energieübertragung.

**Aus der** DE 10 2007 059 046 A1 **ist eine Anordnung zur berührungslosen Energieübertragung bekannt, bei der ein Signalstrom zur Datenübertragung kapazitiv ein- beziehungsweise ausgekoppelt wird.**

**Aus der** DE 10 2007 051 917 A1 **ist ein Linearantrieb bekannt, bei dem Aktoren auf dem langgestreckten Primärleiter bewegbar angeordnet sind.**

**Auch aus der** DE 44 46 779 A1 **ist eine Anordnung zur berührungslosen Energieübertragung bekannt.**

**In der ab Juni 2010 nachveröffentlichten** DE 10 2008 059 091 **ist eine kapazitive und induktive Datenübertragung über einen mittelfrequent bestromten Primärleiter beschrieben.**

Der Erfindung liegt die Aufgabe zugrunde, eine Anordnung zur berührungslosen Energieübertragung weiterzubilden mit möglichst einfacher und kostengünstiger berührungsloser Datenübertragung.

Erfindungsgemäß wird die Aufgabe bei der Anordnung zur berührungslosen Energieübertragung nach den in Anspruch 1 angegebenen Merkmalen gelöst.

Wichtige Merkmale der Erfindung bei der Anordnung sind, dass die Anordnung zur berührungslosen Energieübertragung vorgesehen ist,
wobei ein Primärleiter aus einer Wechselstromquelle elektrisch speisbar ist,
wobei der Primärleiter einen Hinleiter und einen Rückleiter umfasst, die jeweils mit ihrem ersten Ende an ein jeweiliges Potential der Wechselstromquelle angeschlossen sind und mit ihrem jeweiligen anderen Ende miteinander verbunden sind,
wobei zumindest ein entlang dem Primärleiter verfahrbarer Wagen vorgesehen ist,
wobei am Wagen ein Mittel zur Datenübertragung vorgesehen ist,
**wobei** sowohl der Hinleiter als auch der Rückleiter jeweils aus gegeneinander elektrisch isoliert vorgesehenen Einzel-Litzendrähten zusammengesetzt ist,
wobei das Mittel zur Datenübertragung ein erstes Koppelelement umfasst, welches kapazitiv an die Litzendrähte des Hinleiters derart gekoppelt vorgesehen ist, dass Signalspannungen ein- und/oder auskoppelbar sind in die Litzendrähte des Hinleiters,
wobei das Mittel zur Datenübertragung ein zweites Koppelelement umfasst, welches kapazitiv an die Litzendrähte des Rückleiters derart gekoppelt vorgesehen ist, dass Signalspannungen ein- und/oder auskoppelbar sind in die Litzendrähte des Rückleiters,
wobei jedes Koppelelement zwei Koppelflächen umfasst und die Normalenrichtungen der Koppelflächen senkrecht zueinander orientiert sind.

Von Vorteil ist dabei, dass zur Datenübertragung zwar separate Koppelmittel verwendet werden, die aber sehr kostengünstig und einfach herstellbar sind. Insbesondere ist zur Datenübertragung der für die Energieübertragung sowieso vorhandene, mit Wechselstrom von mindestens 10 kHz beaufschlagte Primärleiter verwendet. Somit ist für die Datenübertragung keine zusätzliche Leitung notwendig sondern es ist ermöglicht Signale in den Primärleiter kostengünstig und einfach einzukoppeln und weiterzutragen. Wesentliche Eigenschaft des Primärleiters ist dessen Ausführung aus Hochfrequenzlitze. Erfindungsgemäß wurde erkannt, dass ein kapazitives Einkoppeln von Signalspannungen an ein Geflecht aus Hoch einzeln gegeneinander isoliert ausgeführten Litzendrähten ausführbar ist. Bei gegeneinander nicht elektrisch isolierten Litzendrähten funktioniert diese Datenübertragung gar nicht oder zumindest stark eingeschränkt und nur bei sehr hohen Frequenzen. Unter elektrischer Isolierung wird hier eine Isolierung verstanden, die für Gleichspannungen sehr gut wirksam ist. Es ist allseits bekannt, dass bei sehr hohen Frequenzen die Isolierfähigkeit abnimmt.

Bei einer vorteilhaften Ausgestaltung tauscht der Wagen über den Hinleiter Daten aus, so dass ein erster Datenkanal gebildet ist, wobei der Wagen über den Rückleiter Daten austauscht, so dass ein zweiter Datenkanal gebildet ist, wobei erster und zweiter Datenkanal unabhängig voneinander sind. Von Vorteil ist, dass eine hohe Datenübertragungsrate und/oder eine redundante Datenübertragung ausführbar ist.

Bei einer vorteilhaften Ausgestaltung sind die Litzendrähte jeweils an ihrem äußeren Umfang mit einer elektrischen Isolierschicht versehen. Von Vorteil ist dabei, dass mittels der kapazitiven Einkoppelung ein lokal zwischen verschiedenen Litzendrähten unterschiedliches Potential erzeugbar ist. Wenn die Litzendrähte in elektrisch leitendem Kontakt stehen würden, wären sie im Wesentlichen stets auf dem gleichen Potential. Mittels der elektrischen Isolierung ist es aber erreichbar, dass verschiedene Potentiale erreicht werden und somit Signalspannungen einkoppelbar sind, die zwischen den Litzendrähten bestehen. Sodann breiten sich die Signalspannungen in Richtung des Primärleiters aus und sind in entsprechender Weise detektierbar mittels entsprechender Koppelflächen. Da erfindungsgemäß mit Wechselspannungen und Wechselströmen, vorzugsweise über 10 kHz, gearbeitet wird, entsprechen den lokal wechselnden Potentialen der Litzendrähte gemäß Maxwellscher Gleichungen Wechselströme, weshalb bei der vorliegenden Beschreibung im Wesentlichen nicht fein unterschieden wird zwischen induzierten Strömen und diesen zugehörigen elektrischen Feldern.

Es wird noch angemerkt, dass die erwähnten Ströme oder Spannungen zur Signalübertragung nur zusätzliche Anteile darstellen zu den Anteilen, welche zur Leistungsübertragung notwendig sind. Insbesondere ist hierbei die Durchschlagfestigkeit der verwendeten Isolierungen im Vergleich zur auftretenden Gesamtspannung zu berücksichtigen.

Bei einer Ausgestaltung umfasst das Koppelelement zumindest zwei Koppelflächen, an die eine Spannung anlegbar ist, insbesondere zum Senden von Daten. Von Vorteil ist dabei, dass ein elektrisches Feld ausbildbar ist, das die genannten Signalströme induziert.

Bei einer Ausgestaltung umfasst das Koppelelement zumindest zwei Koppelflächen, wobei die zwischen den Koppelflächen anliegende Spannung erfassbar ist, insbesondere zum Empfangen von Daten. Von Vorteil ist dabei, dass ein Detektieren der Signalströme beziehungsweise Signalspannungen in einfacher Weise ermöglicht ist.

Bei einer vorteilhaften Ausgestaltung sind die Koppelflächen metallisch und/oder im Wesentlichen eben ausgeführt. Von Vorteil ist dabei, dass eine einfache kostengünstige Ausführung ausreichend ist.

Bei einer Ausgestaltung sind die Normalenrichtungen der Koppelflächen senkrecht zueinander orientiert, insbesondere wobei die Normalenrichtungen auch senkrecht stehen zur Richtung des Primärleiters. Von Vorteil ist dabei, dass ein inhomogenes Feld im Bereich des Primärleiters entsteht und somit ein besonders gutes Signal-Rausch-Verhältnis erreichbar ist.

Bei einer nicht erfindungsgemäßen Ausgestaltung sind die Normalenrichtungen der Koppelflächen parallel oder mit einem Winkel von bis zu 40° zueinander orientiert, insbesondere wobei die Normalenrichtungen auch senkrecht stehen zur Richtung des Primärleiters. Von Vorteil ist dabei, dass die Fertigung der Anordnung in einfacher Weise ausführbar ist und die zu fertigenden Winkel unkritische Wertbereiche aufweisen.

Bei einer vorteilhaften Ausgestaltung umfasst ein stationär angeordnetes Mittel zur Datenübertragung ebenfalls ein entsprechendes Koppelelement, insbesondere wobei Datenübertragung zwischen einem oder mehreren Wagen sowie dem stationär angeordneten Mittel vorgesehen ist. Von Vorteil ist dabei, dass zwischen zwei zum Primärleiter beweglichen Fahrzeugen und/oder zwischen einem zum Primärleiter beweglichen Fahrzeug und einer stationär zum Primärleiter angeordneten Vorrichtung die erfindungsgemäße berührungslose Datenübertragung ermöglicht ist.

Bei einer vorteilhaften Ausgestaltung wird in den Primärleiter ein Wechselstrom eingeprägt, insbesondere mit einer Frequenz zwischen 10 und 500 kHz, insbesondere mit über 1 oder sogar 10 Ampere. Von Vorteil ist dabei, dass hohe Leistungen im Bereich von Kilowatt übertragbar sind, wobei nur geringe Verluste auftreten.

Bei einer vorteilhaften Ausgestaltung ist der Sekundärspule eine Kapazität derart in Reihe oder parallel zugeschaltet, dass die zugehörige Resonanzfrequenz im Wesentlichen der Frequenz des in den Primärleiter eingeprägten Wechselstromes entspricht. Von Vorteil ist dabei, dass ein besonders hoher Wirkungsgrad erreichbar ist auch bei schwankendem und/oder schlechtem Kopplungsgrad.

Weitere Vorteile ergeben sich aus den Unteransprüchen.

Die Erfindung wird nun anhand von Abbildungen näher erläutert:
In der Figur 1 ist eine erfindungsgemäße Vorrichtung mit kapazitiver Kopplung in Schnittansicht und in Figur 2 in zugehöriger Seitenansicht gezeigt.
In der Figur 3 ist eine andere nicht erfindungsgemäße Vorrichtung mit kapazitiver Kopplung in Schnittansicht und in Figur 4 in zugehöriger Seitenansicht gezeigt.
In Figur 5 ist eine erfindungsgemäße Anlage

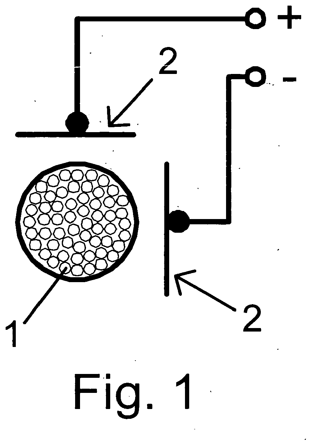

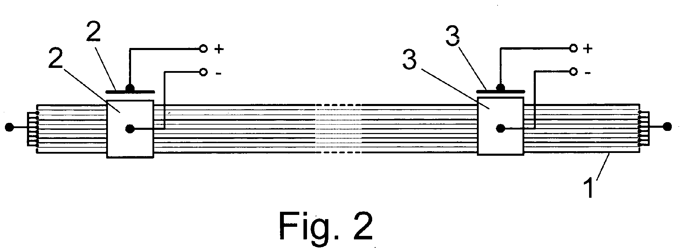

In Figur 1 und 2 ist der Primärleiter 1 gezeigt, der langgestreckt ausgeführt ist und in welchen ein Wechselstrom eingeprägt ist, vorzugsweise mit einer Frequenz zwischen 10 und 500 kHz.

Entlang diesem in einer Anlage verlegten Primärleiter 1 ist ein Wagen bewegbar angeordnet, der eine an den Primärleiter 1 induktiv gekoppelte Sekundärspule umfasst, der eine Kapazität parallel oder in Reihe derart zugeschaltet ist, dass die zugehörige Resonanzfrequenz im Wesentlichen der Frequenz des in den Primärleiter eingeprägten Wechselstromes entspricht. Die Stärke des Wechselstromes kann hierbei 1 oder sogar 10 Ampere dauerhaft übersteigen.

An diesem entlang des Primärleiters 1 verfahrbaren Wagen sind des Weiteren Mittel zur Datenübertragung vorgesehen. Diese umfassen zumindest die in den Figuren 1 und 2 gezeigten Koppelflächen 2. Diese sind als rechteckförmige Metallplatten ausgeführt, deren Normalenrichtung senkrecht aufeinander und senkrecht zur Primärleiterrichtung orientiert sind.

Anstatt rechteckförmiger Metallplatten sind auch quadratische oder abgerundete Metallplatten verwendbar.

An die beiden Metallplatten wird jeweils ein Potential einer hochfrequenten Wechselspannungsquelle angelegt und somit eine Polarisierung im Bereich des Primärleiters 1 bewirkt, der als Hochfrequenz-Litze ausgeführt ist. Dabei besteht also der Primärleiter aus einer Anzahl von Litzendrähten, die jeweils elektrisch zueinander isoliert ausgeführt sind.

In Figur 2 sind weitere analog ausgeführte Koppelflächen 3 gezeigt, die mit einem Spannungserfassungsmittel verbunden sind, wodurch also die zwischen den Metallplatten anliegende Spannung erfasst wird. Die Koppelflächen 3 sind entweder an einem weiteren verfahrbaren Wagen oder stationär angeordnet.

In der geschilderten Weise ist also eine Datenübertragung zwischen dem mit den Koppelflächen 2 verbundenen System und dem mit den Koppelflächen 3 verbundenen System ermöglicht.

Ebenso ist zusätzlich an den Koppelflächen 2 ein Spannungserfassungsmittel und an den Koppelflächen 3 eine hochfrequente Wechselspannungsquelle verbindbar, um dann auf diese Weise eine bidirektionale Datenübertragung zu ermöglichen.

Für die Datenübertragung sind verschiedene Frequenzbänder nutzbar, vorzugsweise oberhalb 10 MHz bis zu 10 GHz.

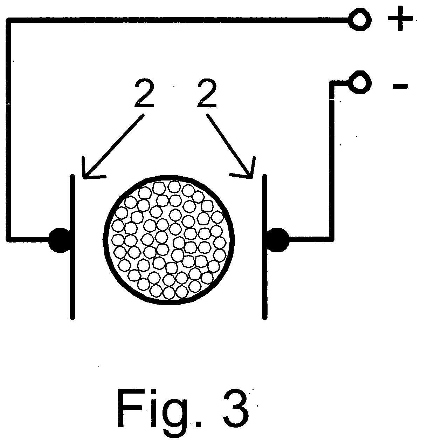

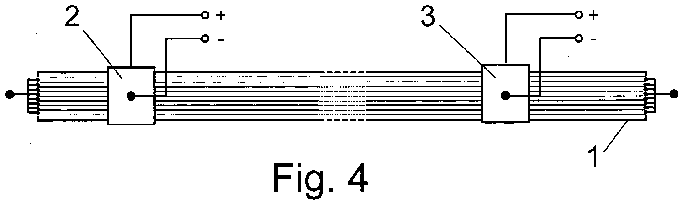

In den Figuren 3 und 4 ist eine zu den Figuren 1 und 2 analog ausgeführte Anordnung gezeigt, wobei allerdings die Normalenrichtungen der ebenen Metallplatten 2 parallel zueinander orientiert sind.

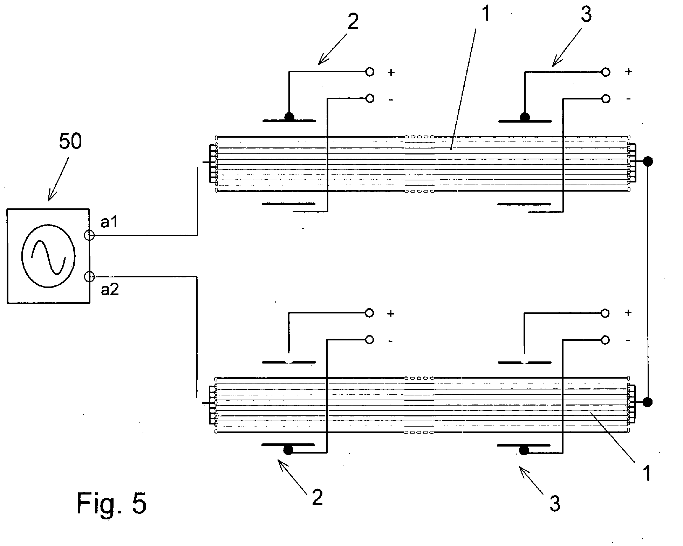

In Figur 5 ist eine gesamte Anlage schematisch skizziert. Hierbei weist eine Wechselstromquelle 50 einen ersten elektrischen Anschluss a1 auf für einen Hinleiter, der als Primärleiter 1 ausgeführt ist, und einen weiteren elektrischen Anschluss a2 für einen Rückleiter, der als Primärleiter 1 ausgeführt ist.

Der gesamte Primärleiter ist als geschlossene Schleife verlegt, insbesondere als langgestreckte Leiterschleife. Hinleiter und Rückleiter sind an ihrem von der Wechselstromquelle 50 abgewandten Ende elektrisch verbunden. Hierbei sind die jeweiligen Litzenenden vorzugsweise miteinander verzinnt.

Somit sind einerseits am entlang dem Hinleiter verfahrbar angeordneten Wagen Koppelflächen gemäß den Figuren 1 und 2 oder alternativ gemäß den Figuren 3 und 4 vorsehbar, so dass eine Datenübertragung durch einen Teilbereich des Hinleiters ausführbar ist. Andererseits sind auch am Rückleiter am entlang dem Rückleiter verfahrbar angeordneten Wagen Koppelflächen gemäß den Figuren 1 und 2 oder alternativ gemäß den Figuren 3 und 4 vorsehbar, so dass eine weitere Datenübertragung durch einen Teilbereich des Hinleiters ausführbar ist.

Auf diese Weise sind also zwei Datenkanäle bereit stellbar. Dies ist auch dann der Fall, wenn Hinleiter und Rückleiter innerhalb der Anlage in engem räumlichem Abstand zueinander verlegt sind. Somit ist also eine hohe Datenrate bereit stellbar und insbesondere sind zwei Kanäle beispielsweise auch für redundante Datenübertragung zur Erhöhung der Sicherheit vorsehbar.

Ansonsten ist auch bei einer Anordnung nach Figur 5 wiederum eine bidirektionale Datenübertragung zwischen zwei verfahrbaren Wagen oder einem Wagen und einer stationären Einheit ausführbar.

Bei weiteren erfindungsgemäßen Ausführungsbeispielen sind auch statt nur zweier Koppelflächen weitere Koppelflächen am gleichen Wagen, also Fahrzeug, vorsehbar.

Zur Datenübertragung sind auch verschiedene Frequenzbänder zusammen nutzbar, indem zwei oder mehrere verschieden frequente Signalverläufe überlagert werden. Auf Empfängerseite sind dann entsprechende Filter vorzusehen.

Das in dieser Schrift verwendete Wort senkrecht ist nicht als exakter Winkel von 90° zu verstehen sondern es sind auch Winkel zwischen 50° und 130° zu verstehen, also geringfügige Abweichungen von der mathematisch exakten senkrechten Richtung. Ebenso sind die Koppelflächen (2,3) vom Primärleiter aus gesehen zwar im Wesentlichen eben gestaltet, aber die ebene Ausführung erlaubt auch kleine wellenförmige Abweichungen von der idealen Ebene, wobei die zugehörige Amplitude auch bis 20% vom Abstand der Koppelfläche zur Oberfläche des Primärleiters betragen darf.

### Bezugszeichenliste

1 Primärleiter
2 Koppelfläche
3 Koppelfläche
50 Wechselstromquelle

## Patentansprüche

1. Anordnung zur berührungslosen Energieübertragung,
wobei ein Primärleiter aus einer Wechselstromquelle elektrisch speisbar ist,
wobei der Primärleiter einen Hinleiter und einen Rückleiter umfasst, die jeweils mit ihrem ersten Ende an ein jeweiliges Potential der Wechselstromquelle angeschlossen sind und mit ihrem jeweiligen anderen Ende miteinander verbunden sind,
wobei zumindest ein entlang dem Primärleiter verfahrbarer Wagen vorgesehen ist,
wobei am Wagen ein Mittel zur Datenübertragung vorgesehen ist,
**wobei** sowohl der Hinleiter als auch der Rückleiter jeweils aus gegeneinander elektrisch isoliert vorgesehenen Einzel-Litzendrähten zusammengesetzt ist,
wobei das Mittel zur Datenübertragung ein erstes Koppelelement umfasst, welches kapazitiv an die Litzendrähte des Hinleiters derart gekoppelt vorgesehen ist, dass Signalspannungen ein- und/oder auskoppelbar sind in die Litzendrähte des Hinleiters,
wobei das Mittel zur Datenübertragung ein zweites Koppelelement umfasst, welches kapazitiv an die Litzendrähte des Rückleiters derart gekoppelt vorgesehen ist, dass Signalspannungen ein- und/oder auskoppelbar sind in die Litzendrähte des Rückleiters, **dadurch gekennzeichnet, dass**
jedes Koppelelement zwei Koppelflächen umfasst und die Normalenrichtungen der Koppelflächen senkrecht zueinander orientiert sind.

2. Anordnung nach mindestens einem der vorangegangenen Ansprüche, wobei der Wagen über den Hinleiter Daten austauscht, so dass ein erster Datenkanal gebildet ist, wobei der Wagen über den Rückleiter Daten austauscht, so dass ein zweiter Datenkanal gebildet ist,
wobei erster und zweiter Datenkanal unabhängig voneinander sind.

3. Anordnung nach mindestens einem der vorangegangenen Ansprüche, wobei die Litzendrähte jeweils an ihrem äußeren Umfang mit einer elektrischen Isolierschicht versehen sind.

4. Anordnung nach mindestens einem der vorangegangenen Ansprüche, wobei jedes Koppelelement zumindest zwei Koppelflächen umfasst, an die eine Spannung anlegbar ist, insbesondere zum Senden von Daten.

5. Anordnung nach mindestens einem der vorangegangenen Ansprüche, wobei jedes Koppelelement zumindest zwei Koppelflächen umfasst, wobei die zwischen den Koppelflächen anliegende Spannung erfassbar ist, insbesondere zum Empfangen von Daten.

6. Anordnung nach mindestens einem der vorangegangenen Ansprüche, wobei die Koppelflächen metallisch und/oder im Wesentlichen eben ausgeführt sind.

7. Anordnung nach mindestens einem der vorangegangenen Ansprüche, wobei die Normalenrichtungen auch senkrecht stehen zur Richtung des Primärleiters.

8. Anordnung nach mindestens einem der vorangegangenen Ansprüche, wobei ein stationär angeordnetes Mittel zur Datenübertragung ebenfalls ein entsprechendes Koppelelement umfasst, insbesondere wobei Datenübertragung zwischen einem oder mehreren Wagen sowie dem stationär angeordneten Mittel vorgesehen ist.

9. Anordnung nach mindestens einem der vorangegangenen Ansprüche, wobei von der Wechselspannungsquelle in den Primärleiter ein Wechselstrom eingeprägt wird, insbesondere mit einer Frequenz zwischen 10 und 500 kHz, insbesondere mit über 1 oder sogar 10 Ampere.

10. Anordnung nach mindestens einem der vorangegangenen Ansprüche, wobei einer an den Primärleiter induktiv gekoppelten Sekundärspule eine Kapazität derart in Reihe oder parallel zugeschaltet ist, dass die zugehörige Resonanzfrequenz im Wesentlichen der Frequenz des in den Primärleiter eingeprägten Wechselstromes entspricht.

## Claims

1. Arrangement for contactless energy transmission,
wherein a primary conductor can be electrically fed from an alternating current source,
wherein the primary conductor comprises a forward conductor and a return conductor which are each connected by their first end to a respective potential of the alternating current source and are connected to one another by their respective other end,
wherein at least one carriage movable along the primary conductor is provided,
wherein a means for data transmission is provided on the carriage,
wherein both the forward conductor and the return conductor are each composed of single-stranded wires provided electrically insulated from one another,
wherein the means for data transmission comprises a first coupling element which is provided capacitively coupled to the stranded wires of the forward conductor in such a way that signal voltages can be coupled into and/or out of the stranded wires of the forward conductor,
wherein the means for data transmission comprises a second coupling element which is provided capacitively coupled to stranded wires of the return conductor such that signal voltages can be coupled into and/or out of the stranded wires of the return conductor,
**characterised in that**
each coupling element comprises two coupling surfaces and the normal directions of the coupling surfaces are oriented perpendicular to one another.

2. Arrangement according to at least one of the preceding claims,
wherein the carriage exchanges data via the forward conductor, so that a first data channel is formed, wherein the carriage exchanges data via the return conductor, so that a second data channel is formed,
wherein first and second data channel are independent of one another.

3. Arrangement according to at least one of the preceding claims,
wherein the stranded wires are each provided with an electrical insulating layer at their outer periphery.

4. Arrangement according to at least one of the preceding claims,
wherein each coupling element comprises at least two coupling surfaces, to which a voltage can be applied, in particular for sending data.

5. Arrangement according to at least one of the preceding claims,
wherein each coupling element comprises at least two coupling surfaces, wherein the voltage applied between the coupling surfaces is detectable, in particular for receiving data.

6. Arrangement according to at least one of the preceding claims,
wherein the coupling surfaces are of metallic and/or substantially plane design.

7. Arrangement according to at least one of the preceding claims,
wherein the normal directions are also perpendicular to the direction of the primary conductor.

8. Arrangement according to at least one of the preceding claims,
wherein a stationarily arranged means for data transmission likewise comprises a corresponding coupling element, in particular wherein data transmission between one or more carriages and the stationarily arranged means is provided.

9. Arrangement according to at least one of the preceding claims,
wherein an alternating current, in particular with a frequency between 10 and 500 kHz, in particular with more than 1 or even 10 amperes, is applied to the primary conductor by the alternating voltage source.

10. Arrangement according to at least one of the preceding claims,
wherein a capacitance is connected in series or in parallel with a secondary coil, inductively coupled to the primary conductor, in such a way that the associated resonant frequency corresponds substantially to the frequency of the alternating current applied to the primary conductor.

## Revendications

1. Dispositif de transmission d'énergie sans contact,
dans lequel un conducteur primaire peut être alimenté électriquement à partir d'une source de courant alternatif,
dans lequel le conducteur primaire comprend un conducteur aller et un conducteur retour, qui sont connectés chacun par l'une de leurs extrémités à un potentiel respectif de la source de courant alternatif et connectés entre eux par leur autre extrémité respective,
dans lequel au moins un chariot mobile le long du conducteur primaire est prévu,
dans lequel un moyen de transmission de données est prévu sur le chariot,
dans lequel le conducteur aller et le conducteur retour sont composés chacun de fils torsadés individuels isolés électriquement les uns des autres,
dans lequel le moyen de transmission de données comprend un premier élément de couplage qui est couplé capacitivement aux fils torsadés du conducteur aller de telle sorte que des tensions de signal peuvent être couplées dans les fils torsadés du conducteur aller et/ou découplées de ceux-ci,
dans lequel le moyen de transmission de données comprend un second élément de couplage qui est couplé capacitivement aux fils torsadés du conducteur retour de telle sorte que des tensions de signal peuvent être couplées dans les fils torsadés du conducteur retour et/ou découplées de ceux-ci,
**caractérisé en ce que**
chaque élément de couplage comprend deux surfaces de couplage et que les directions normales des surfaces de couplage sont orientées perpendiculairement l'une à l'autre.

2. Dispositif selon au moins l'une des revendications précédentes,
dans lequel le chariot échange des données via le conducteur aller de sorte qu'un premier canal de données est formé,
dans lequel le chariot échange des données via le conducteur retour de sorte qu'un second canal de données est formé,
les premier et second canaux de données étant indépendants l'un de l'autre.

3. Dispositif selon au moins l'une des revendications précédentes,
dans lequel les fils torsadés sont munis chacun d'une couche d'isolation électrique sur leur circonférence extérieure.

4. Dispositif selon au moins l'une des revendications précédentes,
dans lequel chaque élément de couplage comprend au moins deux surfaces de couplage auxquelles une tension peut être appliquée, en particulier pour la transmission de données.

5. Dispositif selon au moins l'une des revendications précédentes,
dans lequel chaque élément de couplage comprend au moins deux surfaces de couplage, la tension appliquée entre les surfaces de couplage étant détectable, en particulier pour la réception de données.

6. Dispositif selon au moins l'une des revendications précédentes,
dans lequel les surfaces de couplage sont métalliques et/ou sensiblement planes.

7. Dispositif selon au moins l'une des revendications précédentes,
dans lequel les directions normales sont également perpendiculaires à la direction du conducteur primaire.

8. Dispositif selon au moins l'une des revendications précédentes,
dans lequel un moyen fixe pour la transmission de données comprend également un élément de couplage correspondant, en particulier dans lequel une transmission de données entre un ou plusieurs chariots et le moyen fixe est prévue.

9. Dispositif selon au moins l'une des revendications précédentes,
dans lequel un courant alternatif est appliqué dans le conducteur primaire par la source de tension alternative, en particulier à une fréquence comprise entre 10 et 500 kHz, en particulier de plus de 1 ou même 10 ampères.

10. Dispositif selon au moins l'une des revendications précédentes,
dans lequel un condensateur est connecté en série ou en parallèle à une bobine secondaire couplée par induction au conducteur primaire de telle sorte que la fréquence de résonance associée correspond sensiblement à la fréquence du courant alternatif appliqué dans le conducteur primaire.
